# EUROPÄISCHE PATENTANMELDUNG

(11) **EP 1 505 324 A1**
(43) Veröffentlichungstag der Anmeldung: **09.02.2005**
(21) Anmeldenummer: 04103628.6
(22) Anmeldetag: 28.07.2004
(51) Int. Cl.: F16K 11/074, F15B 13/04

(54) **Schalteinrichtung**

(30) Priorität: 07.08.2003 DE 10336165
(71) Anmelder: ALSTOM Technology Ltd, 5400 Baden (CH)
(72) Erfinder: Burch, Eduard, 5436 Würenlos (CH); Amsler, Marc, 5082 Kaisten (CH)
(74) Vertreter: Dimper, Dieter

(57) **Zusammenfassung**

Die vorliegende Erfindung betrifft eine Einrichtung (1) zum Schalten von wenigstens zwei hydraulischen Anschlüssen (5, 6, 7) zwischen wenigstens zwei Schaltstellungen, umfassend eine Anschlussplatte (2) und eine Schaltplatte (3). Die Anschlussplatte (2) ist mit den wenigstens zwei Anschlüssen (5, 6, 7) ausgestattet. Jeder Anschluss (5, 6, 7) umfasst eine Durchgangsöffnung (8), welche die Anschlussplatte (2) durchdringt. Die Schaltplatte (3) ist mit Befestigungselementen (4) in den wenigstens zwei Schaltstellungen an der Anschlussplatte (2) festlegbar. Die Schaltplatte (3) weist an einer Innenseite (12) wenigstens eine Ausnehmung (13) auf, wobei die Innenseite (12) im montierten Zustand der Anschlussplatte (2) zugewandt ist. In wenigstens einer der Schaltstellungen verbindet die Ausnehmung (13) wenigstens zwei Durchgangsöffnungen (8) der Anschlüsse (5, 6, 7) miteinander.

## Beschreibung

### Technisches Gebiet

Die Erfindung betrifft eine Einrichtung zum Schalten von wenigstens zwei hydraulischen Anschlüssen zwischen wenigstens zwei Schaltstellungen.

### Stand der Technik

In einer Vielzahl von Anwendungen ist es erforderlich, hydraulische Verbindungen zwischen zwei oder mehr hydraulischen Anschlüssen herzustellen oder zu sperren. Hierbei können Schalteinrichtung der eingangs genannten Art zur Anwendung kommen. Eine derartige Schalteinrichtung kann grundsätzlich nach Art eines Ventils aufgebaut sein, bei dem die Schaltfunktion im Vordergrund steht und nicht etwa eine Drosselfunktion. Ein besonderes Anwendungsfeld derartiger Schalteinrichtungen ergibt sich beispielsweise bei geschlossen Rohrsystemen, in denen ein Hydraulikmedium zirkuliert. Im Betrieb eines derartigen Rohrsystems oder Hydrauliksystems kann es zu Verschmutzungen kommen. Dementsprechend ist es erforderlich, das Rohrsystem bedarfsabhängig mit einem entsprechenden Spülmedium zu spülen. An einer geeigneten Stelle des Rohrsystems kann eine Leitung des Rohrsystems aufgetrennt werden. Die dabei entstehenden Anschlussstellen können dann an eine Schalteinrichtung der eingangs genannten Art angeschlossen werden. In einer ersten Schaltstellung der Schalteinrichtung können die beiden Anschlüsse der Leitung miteinander kommunizieren, so dass die Leitung und somit das Rohrsystem ordnungsgemäß arbeiten kann. In einer zweiten Schaltstellung kann die Schalteinrichtung zumindest einen der beiden zuvor genannten Anschlüsse mit einem weiteren Anschluss verbinden, wodurch es möglich ist, ein geeignetes Spülmedium in das Rohrsystem einzuleiten. Da beim Spülvorgang Verunreinigungen aus dem Rohrsystem heraus befördert werden sollen, ist es erwünscht, die Schalteinrichtung so zu gestalten, dass sie beim Spülvorgang durch das schmutzbeladene Spülfluid nicht selbst verschmutzt. Denn nach dem Spülen wird die Schalteinrichtung wieder in ihre erste Schaltstellung umgeschaltet, so dass sie wieder einen Teil des Rohrsystems bildet. Wünschenswert ist außerdem, dass beim Umschalten der Schalteinrichtung die Anschlüsse des Rohrsystems nicht freigelegt werden, sondern dass das Rohrsystem nach außen stets geschlossen ist, um einen Schmutzeintrag zu vermeiden.

### Darstellung der Erfindung

Hier will die Erfindung Abhilfe schaffen. Die Erfindung, wie sie in den Ansprüchen gekennzeichnet ist, beschäftigt sich mit dem Problem, für eine Schalteinrichtung der eingangs genannten Art eine verbesserte Ausführungsform anzugeben, die insbesondere eine reduzierte Verschmutzungsanfälligkeit besitzt, ohne Öffnen der Anschlüsse schaltbar ist und einen robusten sowie vergleichsweise preiswerten Aufbau besitzt.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Schalteinrichtung mittels einer Anschlussplatte, welche die Anschlüsse trägt, und einer Schaltplatte aufzubauen, welche an einer der Anschlussplatte zugewandten Innenseite zumindest eine Ausnehmung aufweist und welche in den verschiedenen Schaltstellungen an der Anschlussplatte befestigbar ist, wobei die Ausnehmung der Schaltplatte in der jeweiligen Schaltstellung die gewünschte Verschaltung der Anschlüsse der Anschlussplatte bewirkt. Die erfindungsgemäße Schalteinrichtung besitzt somit einen extrem einfachen, jedoch äußerst robusten Aufbau. Da bei der erfindungsgemäßen Schalteinrichtung die unterschiedlichen Schaltstellungen durch unterschiedliche Relativlagen zwischen den Platten beim Befestigen erzielt werden, kann bei der erfindungsgemäßen Schalteinrichtung vollständig auf bewegliche oder verstellbare Schaltkörper oder dergleichen innerhalb der Hydraulikströmung verzichtet werden. Auf diese Weise wird die Ausbildung von Bereichen, in denen sich Verunreinigungen besonders leicht ablagern können, wie z.B. umspülte Kanten eines Schaltglieds oder ähnliches vermieden werden. Die Schalteinrichtung besitzt somit eine reduzierte Anfälligkeit für die Ablagerung von Verunreinigungen. Desweiteren kann die Schalteinrichtung besonders einfach auch für sehr große Drücke ausgelegt werden, ohne dass hierzu der Herstellungsaufwand überproportional zunimmt. Der einfache und robuste Aufbau hat außerdem zur Folge, dass die Schalteinrichtung kaum Verschleiß ausgesetzt ist, so dass sie sich durch eine besonders hohe Standzeit auszeichnet.

Entsprechend einer vorteilhaften Ausführungsform können Befestigungselemente, mit denen die beiden Platten aneinander befestigbar sind, durch Schrauben gebildet sein, die in Stecköffnungen, die an der einen Platte ausgebildet sind, eingesteckt und in Gewindeöffnungen, die an der anderen Platte ausgebildet sind, einschraubbar sind. Erfindungsgemäß ist nun vorgesehen, die Stecköffnungen und die Gewindeöffnungen so anzuordnen, dass sie in wenigstens zwei der Schaltstellungen verwendbar sind, um die Platten aneinander festzulegen. Hierdurch ist es möglich, dieselben Gewindeöffnungen und dieselben Stecköffnungen bei wenigstens zwei verschiedenen Relativlagen zwischen den Platten zum Festlegen der Platten aneinander zu nutzen, wodurch sich der Aufbau der Schalteinrichtung vereinfacht. Desweiteren können dadurch Montagefehler vermieden werden, so dass die Schalteinrichtung besonders zuverlässig anwendbar ist.

Die Schaltplatte kann so gestaltet sein, dass eine grundsätzlich beliebige räumliche Lageänderung der Schaltplatte zu den unterschiedlichen Schaltstellungen führt. Beispielsweise kann die Schaltplatte als Wendeplatte ausgebildet sein, die auf der einen Seite eine erste Ausnehmung für die erste Schaltstellung und auf der anderen Seite eine zweite Ausnehmung für die zweite Schaltstellung besitzt. Bevorzugt wird jedoch eine Ausführungsform, bei welcher die Schaltplatte bezüglich einer Längsmittelachse der Schalteinrichtung verdreht werden muss, um die verschiedenen Schaltstellungen einzustellen.

Entsprechend einer besonders vorteilhaften Weiterbildung kann die Schaltplatte an der Anschlussplatte um die Längsmittelachse der Schalteinrichtung drehbar gehaltert sein, was bei gelösten Befestigungselementen ein Umschalten zwischen den wenigstens zwei Schaltstellungen ermöglicht. Bei dieser Ausführungsform ist die Schaltplatte auch beim Verdrehen an der Anschlussplatte axial und radial gehaltert. Hierdurch wird erreicht, dass die Anschlüsse der Schalteinrichtung beim Umschalten nicht nach außen geöffnet werden, wodurch ein Schmutzeintrag bei geöffneten Anschlüssen vermieden wird.

Gemäß einer anderen vorteilhaften Ausführungsform kann eine der Platten, vorzugsweise die Schaltplatte, einen bezüglich einer Längsmittelachse der Schalteinrichtung zylindrischen Umfangsabschnitt aufweisen, der eine sich in Umfangsrichtung erstreckende Führungsnut oder Führungsschulter aufweist, mit der wenigstens ein an der anderen Platte, also vorzugsweise der Anschlussplatte, fixierter Führungsbolzen zusammenwirkt, und zwar so, dass der Führungsbolzen beim Drehverstellen der Schaltplatte relativ zur Anschlussplatte um die Längsmittelachse an einem umfangsseitigen Ende der Führungsnut bzw. der Führungsschulter zur Anlage kommt, wenn die Schaltplatte eine ihrer Schaltstellungen einnimmt. Der Führungsbolzen und die damit zusammenwirkende Führungsnut bzw. Führungsschulter bilden somit einen Drehanschlag, der die Drehverstellungen der Schaltplatte so begrenzt, dass die beiden einstellbaren Enddrehlagen der Schaltplatte den beiden Schaltstellungen der Schaltplatte entsprechen. Das Auffinden der richtigen Relativlage zwischen den beiden Platten wird dadurch erheblich vereinfacht. Die Montage wird dadurch erleichtert; die Funktionssicherheit der Schalteinrichtung verbessert.

Weitere wichtige Merkmale und Vorteile der erfindungsgemäßen Schalteinrichtung ergeben sich auch den Unteransprüchen, aus den Zeichnungen und der zugehörigen Figurenbeschreibung anhand der Zeichnungen.

### Kurze Beschreibung der Zeichnungen

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder ähnliche oder funktional gleiche Bauteile beziehen. Es zeigen, jeweils schematisch,
- Fig. 1: eine Draufsicht auf eine erfindungsgemäße Schalteinrichtung entsprechend einem Pfeil I in Fig. 2,
- Fig. 2: einen Längsschnitt durch die Schalteinrichtung entsprechend den Schnittlinien II in Fig. 1.

### Wege zur Ausführung der Erfindung

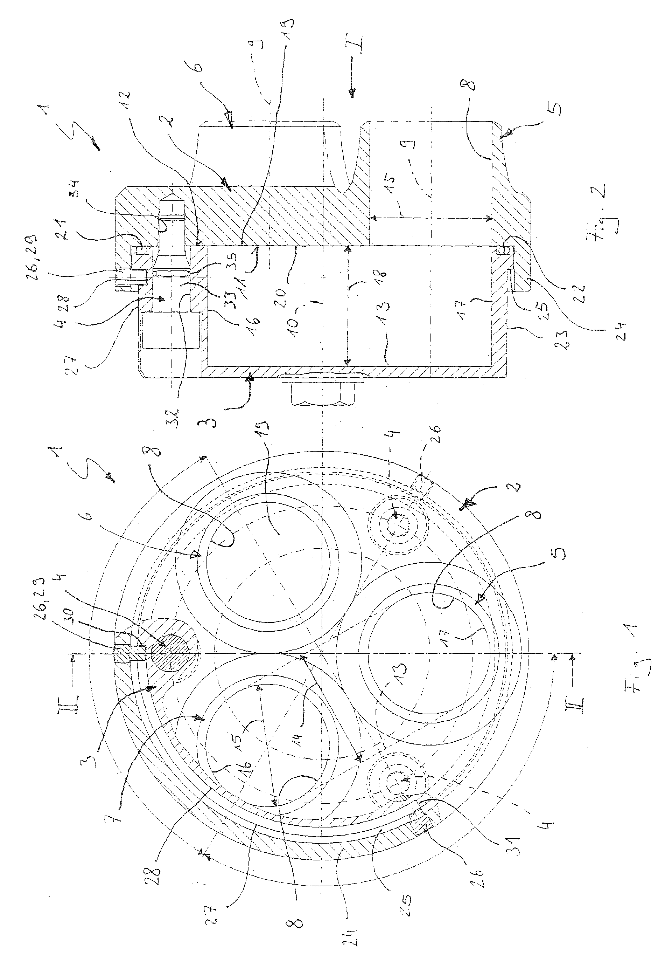

Entsprechend den Fig. 1 und 2 weist eine erfindungsgemäße Schalteinrichtung 1 eine Anschlussplatte 2 und eine Schaltplatte 3 auf. Mit Hilfe von Befestigungselementen 4 sind die beiden Platten 2, 3 aneinander festlegbar bzw. im hier gezeigten montierten Zustand aneinander befestigt.

An der Anschlussplatte 2 sind in der gezeigten, bevorzugten Ausführungsform drei hydraulische Anschlüsse, nämlich ein erster Anschluss 5, ein zweiter Anschluss 6 und dritter Anschluss 7, ausgebildet. Es ist klar, dass bei einer anderen Ausführungsform der Schalteinrichtung 1 auch nur zwei Anschlüsse oder aber vier oder mehr Anschlüsse vorgesehen sein können. Die Anzahl der Anschlüsse hängt dabei von der jeweiligen Anwendung ab, für die die Schalteinrichtung 1 im Einzelfall vorgesehen ist. Am grundsätzlichen Aufbau ändert sich durch die Anzahl der Anschlüsse jedoch nichts.

Jeder Anschluss 5, 6, 7 umfasst eine Durchgangsöffnung 8, welche die Anschlussplatte 2 durchdringt. Zweckmäßig sind die Durchgangsöffnungen 8 zylindrisch ausgebildet, vorzugsweise kreiszylindrisch. Besonders vorteilhaft ist dabei die hier gewählten Ausrichtung der Durchgangsöffnungen 8, die hier so gewählt ist, dass jeweils eine Längsachse 9 der jeweiligen Durchgangsöffnung 8 parallel zueinander und insbesondere parallel zu einer Längsmittelachse 10 der Schalteinrichtung 1 verlaufen. Die Anordnung der einzelnen Anschlüsse 5, 6, 7 erfolgt gemäß der hier gezeigten bevorzugten Ausführungsform so, dass die Durchgangsöffnungen 8 jeweils von der Längsmittelachse 10 beabstandet sind, insgesamt jedoch bezüglich der Längsmittelachse 10 konzentrisch und vorzugsweise gleichmäßig verteilt angeordnet sind. Vorzugsweise besitzen sämtliche Durchgangsöffnungen 8 zumindest an der Innenseite 11 in ihren Mündungen identische Querschnitte.

Die Anschlussplatte 2 besitzt eine im montierten Zustand der Schaltplatte 3 zugewandte Innenseite 11, in der die Durchgangsöffnungen 8 münden und somit zur Schaltplatte 3 hin offen sind. Im Unterschied dazu besitzt die Schaltplatte 3 eine im montierten Zustand der Anschlussplatte 2 zugewandte Innenseite 12, in der eine Ausnehmung 13 ausgebildet ist. Diese Ausnehmung 13 ist somit zur Anschlussplatte 2 hin offen.

Die Ausnehmung 13 ist nun so positioniert und dimensioniert, dass sie in der in den Fig. gezeigten ersten Schaltstellung der Schaltplatte 3 die Durchgangsöffnung 8 des ersten Anschlusses 5 mit der Durchgangsöffnung 8 des dritten Anschlusses 7 verbindet. Die Formgebung der Ausnehmung 13 ist dabei zweckmäßig so gewählt, dass sich möglichst wenig Totwasserzonen und Rückströmzonen ausbilden können, wenn die Ausnehmung 13 durch die Durchgangsöffnungen 8 des ersten und dritten Anschlusses 5, 7 durchströmt wird. Beispielsweise ist eine Breite 14 der Ausnehmung 13 gleich groß gewählt wie ein Durchmesser 15 der kreiszylindrischen Durchgangsöffnungen 8.

Desweiteren sind die den Durchgangsöffnungen 8 zugeordneten Längsenden 16 und 17 der Ausnehmung 13 an die Kontur der Durchgangsöffnungen 8 angepasst. Im hier gezeigten Beispiel sind diese Längsenden 16, 17 mit einer Halbzylinderkontur versehen, deren Radius demjenigen der Durchgangsöffnungen 8 in deren Mündungen entspricht.

Desweiteren ist es zweckmäßig, die Ausnehmung 13 im Hinblick auf einen minimalen Durchströmungswiderstand auszugestalten. Beispielsweise ist hierzu eine Tiefe 18 der Ausnehmung 13 gleich groß gewählt wie der Durchmesser 15 der Durchgangsöffnungen 8 in deren Mündungen. Eine weitere Verbesserung kann beispielsweise dadurch erreicht werden, dass die Längsenden 16, 17 der Ausnehmung 13 zusätzlich in der Umlenkrichtung abgerundet werden.

Von entscheidender Bedeutung ist bei der erfindungsgemäßen Schalteinrichtung 1 jedoch die Tatsache, dass im durchströmten Bereich der Schalteinrichtung 1 kein Schaltglied oder Stellglied erforderlich ist, so dass kritische Konturen, an oder in denen sich Verunreinigen ablagern können, ohne größeren Aufwand vermieden werden können. In der Folge ist die erfindungsgemäße Schalteinrichtung 1 besonders unanfällig für Verunreinigungen.

Wie insbesondere Fig. 2 zu entnehmen ist, erfolgt die Gestaltung der Platten 2, 3 zweckmäßig so, dass die Innenseite 12 der Schaltplatte 3 eine ebene Kontaktkontur 19 besitzt, während die Innenseite 11 der Anschlussplatte 2 eine ebene Gegenkontaktkontur 20 aufweist. Im montierten Zustand liegen Kontaktkontur 19 und Gegenkontaktkontur 20 flächig aneinander an. Durch die gewählte Befestigungsmethode mittels der Schrauben 4 sind dabei die Kontaktkontur 19 und die Gegenkontaktkontur 20 mit vergleichsweise großen Druckkräften gegeneinander vorspannbar, wodurch jegliches Spiel eliminiert werden kann. Insbesondere können dadurch Spalten vermieden werden, in denen sich Verunreinigungen ablagern könnten.

Um die Strömungsführung innerhalb der Schalteinrichtung 1 nach außen abdichten zu können, ist zwischen den einander zugewandten Innenseiten 11, 12 der Platten 2, 3 im montierten Zustand eine Axialdichtung 21, hier in Form eines O-Rings angeordnet. Vorzugsweise enthält eine der Platten 2, 3, hier die Schaltplatte 3, eine Aufnahmenut 22, in welche die Dichtung 21 eingelegt ist.

Bei der hier gezeigten Ausführungsform ist die Schaltplatte 3 bezüglich der Längsmittelachse 10 mit einer rotationssymmetrischen Außenkontur 23 ausgestattet. Auf diese Weise ist es möglich, die Schaltplatte 3 zum Umschalten zwischen ihren Schaltstellungen um die Längsmittelachse 10 zu drehen, sofern die Befestigungselemente 4 gelöst sind. Passend hierzu weist die Anschlussplatte 2 zweckmäßig eine geeignete Haltekontur 24 auf, die radial außen an der Anschlussplatte 2 ausgebildet ist und sich axial erstreckt und dabei über die Innenseite 11 der Anschlussplatte 2 vorsteht. Die Haltekontur 24 kann dabei durch einzelne, umfangsmäßig verteilt angeordnete und voneinander beabstandete Stege gebildet sein. Ebenso ist es möglich, die Haltekontur 24 durch einen umfangsmäßig vollständig umlaufenden Kragen auszugestalten. Mit Hilfe dieser Haltekontur 24 ist das konzentrisch darin eingesteckte, vorausgehende Ende (Innenseite 12) der Schaltplatte 3 in radialer Richtung an der Anschlussplatte 2 formschlüssig fixiert. Um eine zusätzliche axiale Fixierung der Schaltplatte 3 an der Anschlussplatte 2 zu erzielen, kann - wie hier - die Schaltplatte 3 an ihrem vorausgehenden Ende mit einer ringförmig umlaufenden Stufe 25 ausgestattet sein. Die Anschlussplatte 2 ist dann mit wenigstens einem, hier mit drei Haltebolzen 26 ausgestattet, die radial die Stufe 25 hintergreifen. Die Haltebolzen 26 sind dabei an der Haltekontur 24 befestigt. Die beiden Platten 2, 3 sind somit radial durch die Haltekontur 24 und axial durch die Stufe und die Haltebolzen 26 aneinander verliersicher gehaltert. Sofern die Haltebolzen 26 keine radiale Verspannung zwischen den Platten 2, 3 erzeugen, sind die beiden Platten 2, 3 bezüglich der Längsmittelachse 10 zueinander verdrehbar, sofern die Schrauben 4 entfernt sind. Dementsprechend ist die Schaltplatte 3 drehbar an der Anschlussplatte 2 gelagert bzw. gehaltert.

Bei der hier gezeigten, speziellen Weiterbildung ist die Schaltplatte 3 entlang eines winkelmäßig begrenzten Umfangsabschnitts 27 mit einer sich in Umfangsrichtung erstreckenden Führungsnut 28 ausgestattet. In diese Führungsnut 28 greift ein Führungsbolzen 29 radial ein. Dieser Führungsbolzen 29 ist dabei an der Anschlussplatte 2, vorzugsweise an deren Haltekontur 24 befestigt. Im vorliegenden Fall wird der Führungsbolzen 29 durch einen der Haltebolzen 26 gebildet, der im Unterschied zu den anderen Haltebolzen 26 in radialer Richtung verlängert ist, um in die Führungsnut 28 eingreifen zu können. Die Führungsnut 28 ist in ihrer Erstreckung durch umfangsseitige Nutenden 30 bzw. 31 begrenzt. Die Anordnung und Dimensionierung der Führungsnut 28 ist hier so gewählt, dass der Führungsbolzen 29 genau dann an einem der Nutenden 30, 31 in Umfangsrichtung zur Anlage kommt, wenn die Schaltplatte 3 eine ihrer Schaltstellungen einnimmt. Dementsprechend liegt in Fig. 1 der Führungsbolzen 29 an dem der ersten Schaltstellung zugeordneten Nutende 30 an.

Anstelle einer Führungsnut 28 kann auch eine in Umfangsrichtung begrenzte weitere Stufe vorgesehen sein, die dann als Führungsstufe dient. Ebenso können andere Drehbegrenzungsmittel vorgesehen sein, welche die Drehbeweglichkeit der beiden Platten 2, 3 relativ zueinander in beiden Drehrichtungen in den beiden Schaltstellungen begrenzen.

Die Festlegung der Schaltplatte 3 an der Anschlussplatte 2 erfolgt hier - wie erwähnt - mittels Schrauben 4. Zu diesem Zweck ist die Schaltplatte 3 für jede Schraube 3 mit einer Stecköffnung 32 ausgestattet, durch welche die jeweilige Schraube 4 mit ihrem Schaft 33 durchsteckbar ist. Desweiteren besitzt die Anschlussplatte 2 für jede Schraube 4 eine Gewindeöffnung 34, in die die jeweilige Schraube 4 mit einem an ihrem Schaft 33 ausgebildeten Gewinde einschraubbar ist. Desweiteren ist hier der Schaft 33 der jeweiligen Schraube 4 mit einer Radialdichtung 35 ausgestattet, um die Schraube 4 nach außen abzudichten. Die Stecköffnungen 32 und die Gewindeöffnungen 34 sind hier gezielt so angeordnet, dass sie in wenigstens zwei Schaltstellungen der Schaltplatte 3 zum Festlegen der Schaltplatte 3 an der Anschlussplatte 2 verwendet werden können. Die Öffnungen 32 und 34 sind demnach umfangsmäßig gleichmäßig verteilt angeordnet. Durch diese Bauweise vereinfacht sich der Aufbau der Schalteinrichtung 1.

Die hier gezeigte Ausführungsform der Schalteinrichtung 1 ist nach Art eines 3/2-Wege-Ventil ausgebildet, die entsprechend ihrer Bezeichnung 3/2 mit drei Anschlüssen 5, 6, 7 und mit zwei Schaltstellungen ausgestattet ist. Die in den Fig. 1 und 2 gezeigte Ausführungsform der Schalteinrichtung 1 funktioniert wie folgt:

In den Fig. 1 und 2 ist die erste Schaltstellung der Schalteinrichtung 1 wiedergegebenen, in welcher die Ausnehmung 13 die Durchgangsöffnung 8 des ersten Anschlusses 5 mit der Durchgangsöffnung 8 des dritten Anschlusses 7 kommunizierend verbindet.

In der ersten Schaltstellung erstreckt sich die Ausnehmung 13 beabstandet zur Durchgangsöffnung 8 des zweiten Anschlusses 6. Dementsprechend herrscht keine kommunizierende Verbindung zwischen der Ausnehmung 13 und der Durchgangsöffnung 8 des zweiten Anschlusses 6. Vielmehr ist die Durchgangsöffnung 8 des zweiten Anschlusses 6 durch die Kontaktkontur 19 der Schaltplatte 3 mehr oder weniger dicht verschlossen.

Um nun die Schaltplatte 3 von der ersten Schaltstellung in die zweite Schaltstellung umschalten zu können, müssen zunächst die Schrauben 4 entfernt werden. Nach dem Entfernen der Schrauben 4 kann die Schaltplatte 3 um die Längsmittelachse 10 gedreht werden, also bezüglich Fig. 1 im Uhrzeigersinn. Da hier drei Anschlüsse 5, 6, 7 vorgesehen sind, die in Umfangsrichtung gleichmäßig verteilt angeordnet sind, kann die Schaltplatte 3 um 120°gegenüber der Anschlussplatte 2 verdreht werden. In dieser zweiten Schaltstellung liegen sich die Stecköffnungen 32 und die Gewindeöffnungen 34 wieder axial fluchtend gegenüber, jedoch in einer anderen Kombination als in der ersten Schaltstellung. Dementsprechend können die Schrauben 4 wieder eingesetzt werden. Durch das Drehen der Schaltplatte 3 verändert sich auch die Relativlage der Ausnehmung 13. In der zweiten Schaltstellung ist die Ausnehmung 13 so angeordnet, dass sie nun die Durchgangsöffnung 8 des dritten Anschlusses 7 mit der Durchgangsöffnung 8 des zweiten Anschlusses 6 verbindet. Die Durchgangsöffnung 8 des ersten Anschlusses 5 liegt dann außerhalb der Ausnehmung 13 und ist dadurch von der ebenen Kontaktkontur 19 der Schaltplatte 3 versperrt.

Ein wesentlicher Vorteil der erfindungsgemäßen Schalteinrichtung 1 wird auch darin gesehen, dass die Anschlüsse 5, 6, 7 zu keinem Zeitpunkt nach außen geöffnet werden müssen, um die Schaltplatte 3 von der einen Schaltstellung in die anderer Schaltstellung zu überführen. Hierdurch kann ein unerwünschter Schmutzeintrag bei geöffneten Anschlüssen 5, 6, 7 vermieden werden.

Darüber hinaus kann die Schalteinrichtung 1 dennoch besonders einfach geöffnet werden, für den Fall, dass doch Wartungs- oder Reinigungsarbeiten erforderlich sein sollten. Hierzu werden zunächst wieder die Schrauben 4 entfernt. Des weiteren sind auch die Haltebolzen 26 bzw. der Führungsbolzen 29 zu entfernen. Dann kann die Schaltplatte 3 von der Anschlussplatte 2 axial abgezogen werden.

Obwohl die vorliegende Erfindung hier anhand einer Ausführungsform beschrieben worden ist, bei welcher die Schalteinrichtung 1 als 3/2-Wege-Ventil ausgestaltet ist, erfolgt dies ohne Beschränkung der Allgemeinheit. Insbesondere kann die Schalteinrichtung 1 auch als 2/2-Wege-Ventil ausgebildet werden, bei dem in der ersten Schaltstellung die beiden Anschlüsse über die Ausnehmung miteinander verbunden sind, während in der zweiten Schaltstellung beide Anschlüsse gesperrt sind. Desweiteren ist eine Ausführung als 4/2-Wege-Ventil möglich, bei dem die vier Anschlüsse in den beiden Schaltstellungen entsprechend geschaltet werden können.

### Bezugszeichenliste

- 1: Schalteinrichtung
- 2: Anschlussplatte
- 3: Schaltplatte
- 4: Befestigungselement/Schraube
- 5: erster Anschluss
- 6: zweiter Anschluss
- 7: dritter Anschluss
- 8: Durchgangsöffnung
- 9: Längsmittelachse von 8
- 10: Längsmittelachse von 1
- 11: Innenseite von 2
- 12: Innenseite von 3
- 13: Ausnehmung
- 14: Breite von 13
- 15: Durchmesser von 8
- 16: Längsende von 13
- 17: Längsende von 13
- 18: Tiefe von 13
- 19: Kontaktkontur von 3
- 20: Gegenkontaktkontur von 2
- 21: Axialdichtung
- 22: Aufnahmenut
- 23: Außenkontur von 3
- 24: Haltekontur von 2
- 25: Haltestufe
- 26: Haltebolzen
- 27: Umfangsabschnitt von 3
- 28: Führungsnut
- 29: Führungsbolzen
- 30: Nutende
- 31: Nutende
- 32: Stecköffnung
- 33: Schaft von 4
- 34: Gewindeöffnung
- 35: Radialdichtung

## Patentansprüche

1. Einrichtung zum Schalten von wenigstens zwei hydraulischen Anschlüssen (5, 6, 7) zwischen wenigstens zwei Schaltstellungen, mit einer Anschlussplatte (2), an der die wenigstens zwei Anschlüsse (5, 6, 7) ausgebildet sind, wobei jeder Anschluss (5, 6, 7) eine die Anschlussplatte (2) durchdringende Durchgangsöffnung (8) umfasst, und mit einer Schaltplatte (3), die mit Befestigungselementen (4) in den wenigstens zwei Schaltstellungen an der Anschlussplatte (2) festlegbar ist, die an einer im montierten Zustand der Anschlussplatte (2) zugewandten Innenseite (12) wenigstens eine Ausnehmung (13) aufweist, die in wenigstens einer der Schaltstellungen wenigstens zwei Durchgangsöffnungen (8) der Anschlüsse (5, 6, 7) miteinander kommunizierend verbindet.

2. Schalteinrichtung nach Anspruch 1,
**dadurch gekennzeichnet,**
- **dass** die Befestigungselemente durch Schrauben (4) gebildet sind, die im montierten Zustand in Stecköffnungen (32) der einen Platte (2) eingesteckt und in Gewindeöffnungen (34) der anderen Platte (3) eingeschraubt sind,
- **dass** die Stecköffnungen (32) und die Gewindeöffnungen (34) so angeordnet sind, dass sie in wenigstens zwei der Schaltstellungen zum Festlegen der Platten (2,3 ) aneinander verwendbar sind.

3. Schalteinrichtung nach Anspruch 1 oder 2,
**dadurch gekennzeichnet,**
- **dass** die der Anschlussplatte (2) zugewandte Innenseite (12) der Schaltplatte (3) eine ebene Kontaktkontur (19) aufweist,
- **dass** eine der Schaltplatte (3) zugewandte Innenseite (11) der Anschlussplatte (2) eine ebene Gegenkontaktkontur (20) aufweist,
- **dass** Kontaktkontur (19) und Gegenkontaktkontur (20) im montierten Zustand flächig aneinander liegen.

4. Schalteinrichtung nach einem der Ansprüche 1 bis 3,
**dadurch gekennzeichnet,**
**dass** zwischen einander zugewandten Innenseiten (11, 12) der Platten (2, 3) im montierten Zustand eine Axialdichtung (21) angeordnet ist.

5. Schalteinrichtung nach einem der Ansprüche 1 bis 4,
**dadurch gekennzeichnet,**
**dass** die wenigstens zwei Anschlüsse (5, 6, 7) und/oder deren Durchgangsöffnungen (8) zumindest in deren der Schaltplatte (3) zugewandten Mündungen bezüglich einer Längsmittelachse (10) der Schalteinrichtung (1) beabstandet und konzentrisch verteilt angeordnet sind.

6. Schalteinrichtung nach einem der Ansprüche 1 bis 5,
**dadurch gekennzeichnet,**
**dass** die Schaltplatte (3) zum Umschalten zwischen den wenigstens zwei Schaltstellungen bei gelösten Befestigungselementen (4) um eine Längsmittelachse (10) der Schalteinrichtung (1) drehbar an der Anschlussplatte (2) gehaltert ist.

7. Schalteinrichtung nach einem der Ansprüche 1 bis 6,
**dadurch gekennzeichnet,**
**dass** eine der Platten (2, 3) einen bezüglich der Längsmittelachse (10) der Schalteinrichtung (1) zylindrischen Umfangsabschnitt (27) aufweist, der eine sich in Umfangsrichtung durch wenigstens einen radial abstehenden Anschlag (30, 31) begrenzt ist, mit dem wenigstens ein an der anderen Platte (2) fixierter Führungsbolzen (29) zusammenwirkt, derart, dass der Führungsbolzen (29) beim Drehverstellen der Schaltplatte (3) relativ zur Anschlussplatte (2) um die Längsmittelachse (10) am Anschlag (30, 31) zur Anlage kommt, wenn die Schaltplatte (3) eine ihrer Schaltstellungen einnimmt.

8. Schalteinrichtung nach Anspruch 7,
**dadurch gekennzeichnet,**
- **dass** der Umfangsabschnitt (27) eine sich in Umfangsrichtung erstreckende Führungsnut (28) oder Führungsschulter aufweist,
- **dass** der wenigstens eine Anschlag durch ein umfangsseitiges Ende (30, 31) der Führungsnut (28) oder der Führungsstufe gebildet ist.

9. Schalteinrichtung nach einem der Ansprüche 1 bis 8,
**dadurch gekennzeichnet,**
**dass** die Tiefe (18) der Ausnehmung (13) dem Durchmesser der Durchgangsöffnung (8) eines der Anschlüsse (5, 6, 7) entspricht.

10. Schalteinrichtung nach einem der Ansprüche 1 bis 9,
**dadurch gekennzeichnet,**
- **dass** die Schalteinrichtung (1) nach Art eines 2/2-Wege-Ventils mit zwei Anschlüssen und zwei Schaltstellungen ausgebildet ist,
- **dass** die Ausnehmung (13) in der einen Schaltstellung mit den Durchgangsöffnungen (8) der beiden Anschlüsse kommuniziert,
- **dass** die Ausnehmung (13) in der anderen Schaltstellung mit keiner der Durchgangsöffnungen (8) kommuniziert.

11. Schalteinrichtung nach einem der Ansprüche 1 bis 9,
**dadurch gekennzeichnet,**
- **dass** die Schalteinrichtung (1) nach Art eines 3/2-Wege-Ventils mit drei Anschlüssen (5, 6, 7) und zwei Schaltstellungen ausgebildet ist,
- **dass** die Ausnehmung (13) in der einen Schaltstellung mit der Durchgangsöffnung (8) des ersten Anschlusses (5) und mit der Durchgangsöffnung (8) des zweiten Anschlusses (6), jedoch nicht mit der Durchgangsöffnung (8) des dritten Anschlusses (7) kommuniziert,
- **dass** die Ausnehmung (13) in der anderen Schaltstellung mit der Durchgangsöffnung (8) des zweiten Anschlusses (6) und mit der Durchgangsöffnung (8) des dritten Anschlusses (7), jedoch nicht mit der Durchgangsöffnung (8) des ersten Anschlusses (5) kommuniziert.

12. Schalteinrichtung nach einem der Ansprüche 1 bis 11,
**dadurch gekennzeichnet,**
**dass** die Ausnehmung (13) hinsichtlich eines reduzierten Durchströmungswiderstands ausgestaltet ist.

13. Schalteinrichtung nach einem der Ansprüche 1 bis 12,
**dadurch gekennzeichnet,**
**dass** die Ausnehmung (13) zur Vermeidung von Totwasserzonen und Rückströmzonen ausgestaltet ist.
